# EUROPÄISCHE PATENTSCHRIFT

(11) **EP 1 270 056 B1**
(45) Veröffentlichungstag und Bekanntmachung des Hinweises auf die Patenterteilung: **11.08.2004**
(21) Anmeldenummer: 02000366.1
(22) Anmeldetag: 05.01.2002
(51) Int. Cl.: B01D 29/00, B01D 29/64, B01D 24/16, B01D 24/46, B01D 37/00, B01D 35/027

(54) **Filtervorrichtung für Flüssigkeiten, insbesondere für Kühlflüssigkeiten**
Filter for liquids in particular for machining coolants
Filtre à liquid, en particulier pour réfrigerants lubrifiants encrasés

(30) Priorität: 30.06.2001 DE 20110879 U; 18.08.2001 DE 20113746 U
(43) Veröffentlichungstag der Anmeldung: 02.01.2003
(73) Patentinhaber: GF-Filtertechnik gmbH, 72820 Sonnenbühl-Genkingen (DE)
(72) Erfinder: Früh, Fritz, 72820 Sonnenbühl (DE)
(74) Vertreter: Möbus, Daniela, Dr.-Ing.

(56) Entgegenhaltungen:
- EP-A- 0 124 880
- FR-A- 2 517 559
- US-A- 4 342 649
- US-B1- 6 183 643

## Beschreibung

Die Erfindung betrifft eine Filtervorrichtung für Flüssigkeiten mit einem Behälter, in den die zu filternde Flüssigkeit einströmt und der auf seiner Oberseite mit einem Filter verschlossen ist, sodass die im Behälter ansteigende Flüssigkeit beim Durchtritt durch das Filter gereinigt wird und das Filtrat oberhalb des Filters in einen Auffangbehälter abläuft, dadurch gekennzeichnet, dass unterhalb des Filters mindestens eine Streifenbürste vorgesehen ist, mit der die Unterseite des Filters und/oder der Boden des Behälters reinigbar ist.

Im Bereich der Abwasseraufbereitung mittels Aufstrom-Reaktoren sind Filtervorrichtungen mit diesen Merkmalen beispielsweise bekannt aus der US-A-4,342,649 oder der EP-A-0 124 880 A2.

Bei derartigen Aufstromreaktoren wird das aufzubereitende Abwasser von unten nach oben durch einen Flockulationstank geleitet, an dessen Oberseite eine Schicht von Filterpartikeln vorgesehen ist, welche Feststoffpartikel, die sich nicht aufgrund der Schwerkraft im Tank abgesetzt haben, aus dem aufströmenden Wasser zurückhalten, sodass das oberhalb der Filterschicht austretende Filtrat von den Feststoffpartikeln befreit ist.

Aus der US-A-6,183,643 ist ebenfalls ein Aufstromreaktor zur Denitrifikation von Wasser bekannt, bei dem allerdings das Filter nicht aus einer Schicht von an sich frei beweglichen Filterpartikeln besteht, welche an der Oberseite des Tank auf dem Flüssigkeitsspiegel schwimmen, sondern durch ein schweres Polypropylenmaschengewebe gebildet wird, welches im unteren Bereich des Tanks vorgesehen ist und durch das das zu denitrifizierende Wasser nach Durchlaufen einer Schlammschicht hindurchtritt, um in einem darüber liegenden Schwebebereich mittels Bakterien einer weiteren biologischen Behandlung unterzogen zu werden.

Bei allen drei genannten Druckschriften ist jeweils eine Reinigung der Filtereinrichtung durch Rückspülung in Abstromrichtung mittels Klarwasser vorgesehen.

Ganz andere Probleme der Reinigung von Flüssigkeiten ergeben sich bei Filtervorrichtungen für die Kühlflüssigkeiten von spanabhebenden Werkzeugmaschinen.

Die Kühlflüssigkeiten von spanabhebenden Werkzeugmaschinen werden in Filtervorrichtungen von Spänen, anderen Schmutzpartikeln befreit und anschließend der Werkzeugmaschine wieder zugeführt. Zur Filterung der Kühlflüssigkeiten sind verschiedene Vorrichtungen wie Sedimentationsfilter oder Bandfilter bereits bekannt. Bei allen Filtern, die mit Filtergeweben oder - papieren arbeiten, wird dabei die zu reinigende Flüssigkeit mittels der Schwerkraft von oben nach unten durch das Filter hindurchgeleitet. Dabei bildet sich im Laufe der Zeit auf der Oberfläche des Filters eine Schicht aus abgelagerten Schmutzpartikeln, die regelmäßig entfernt werden muss, um die weitere Funktionsfähigkeit des Filters sicherzustellen.

Der vorliegenden Erfindung liegt die Aufgabe zugrunde, eine Filtervorrichtung für die Kühlflüssigkeiten von spanabhebenden Werkzeugmaschinen vorzuschlagen, bei der es zu einem sehr viel schwächeren und langsameren Zusetzen der Filteroberfläche kommt und bei der dennoch sich im Laufe der Zeit ansetzende Schmutzpartikel leicht von der Filteroberfläche entfernt werden können.

Die Aufgabe wird mit einer Filtervorrichtung mit den Merkmalen des Anspruchs 1 gelöst. Bei der erfindungsgemäßen Filtervorrichtung tritt also die zu reinigende Flüssigkeit nicht mehr durch die Schwerkraft von oben nach unten durch das Filter hindurch, sondern mit ansteigendem Flüssigkeitsspiegel im Behälter von unten nach oben. Dabei sinkt der Großteil der in der zu reinigenden Flüssigkeit enthaltenen Schmutzpartikel zum Behälterboden ab und setzt sich nicht an der Filteroberfläche fest. Dadurch kommt es insgesamt zu einem sehr viel langsameren Zusetzen der Filterfläche als bei herkömmlichen Filtervorrichtungen, bei denen die zu reinigende Flüssigkeit von oben nach unten durch das Filter hindurchbewegt wird. Das Filter kann dabei in an sich bekannter Weise ein Gewebe oder ein Filterpapier sein. Sich im Laufe der Zeit dennoch an der Unterseite des Filters ansetzende Schmutzpartikel können durch eine oder mehrere Streifenbürsten wieder entfernt werden. Auch zur Reinigung des Behälterbodens können Streifenbürsten eingesetzt werden.

Bei einer bevorzugten Ausgestaltung sind dabei zur Reinigung der Unterseite des Filters sowie des Bodens des Behälters mehrere, an einem umlaufenden Träger angeordnete Streifenbürsten vorgesehen, die die Verschmutzung beispielsweise durch eine Öffnung in der Seitenwand austragen. Durch diese Öffnung kann auch die zu filternde Flüssigkeit aus einem vorgeschalteten Behälter einströmen. Dabei ist es vorteilhaft, wenn sich die Öffnung in der Seitenwand des Behälters bis zum Behälterboden erstreckt. Die sich vor den Streifenbürsten ansammelnden Schmutzpartikel können dann einfach durch die Öffnung in der Seitenwand in den vorgeschalteten Behälter hinausgeschoben werden. Noch besser gelingt der Austrag der Schmutzpartikel, wenn der Behälterboden in Richtung auf die Öffnung in der Seitenwand geneigt ist.

Es kann außerdem ein Schlamm- und Späneförderer zum Austrag der Verschmutzungen aus der Vorrichtung vorgesehen sein.

Weitere Vorteile ergeben sich, wenn die Behälter einen rechteckigen Querschnitt aufweisen und unmittelbar aneinander angrenzen. Auf diese Weise ist eine sehr kompakte Bauweise der erfindungsgemäßen Filtervorrichtung möglich. Ist dabei der Boden des Behälters gegenüber dem Boden eines ggf. vorgeschalteten Behälters erhöht, so lässt sich der Schmutzaustrag vom Behälter in den vorgeschalteten Behälter durch eine Öffnung in der Seitenwand noch erleichtern. Der Boden des Behälters kann dabei vorzugsweise so erhöht und ggf. zusätzlich geneigt sein, dass der Schmutzaustrag aus dem Behälter durch die Seitenwandung im Behälter direkt auf einen im vorgeschalteten Behälter angeordneten Schlamm- und Späneförderer im ersten Behälter erfolgt.

Im Auffangbehälter kann außerdem eine Umlenkvorrichtung für die gefilterte Flüssigkeit angeordnet sein, sodass die Flüssigkeit zunächst Richtung Behälterboden und anschließend Richtung Behälteroberseite strömt. Dadurch können sich ggf. noch im Filtrat enthaltene Schwebstoffe am Behälterboden absetzen.

Bei einer Vorrichtung für Kühlflüssigkeiten ist es außerdem für eine kontinuierliche Umwälzung der Kühlflüssigkeit vorteilhaft, wenn die Vorrichtung mit einer Werkzeugmaschine verbunden und im Auffangbehälter eine Pumpe zur Rückförderung der gereinigten Kühlflüssigkeit zur Werkzeugmaschine angeordnet ist.

Nachfolgend werden bevorzugte Ausführungsbeispiele einer erfindungsgemäßen Filtervorrichtung anhand der Zeichnung näher erläutert.

Es zeigen:
- Fig. 1: einen Längsschnitt durch eine erste erfindungsgemäße Filtervorrichtung;
- Fig. 2: eine Draufsicht auf die Filtervorrichtung aus Fig. 1;
- Fig. 3: einen Längsschnitt durch eine zweite Filtervorrichtung;
- Fig. 4: eine Draufsicht auf die Filtervorrichtung aus Fig. 3;
- Fig. 5: einen Querschnitt durch die Filtervorrichtung aus Fig. 4.

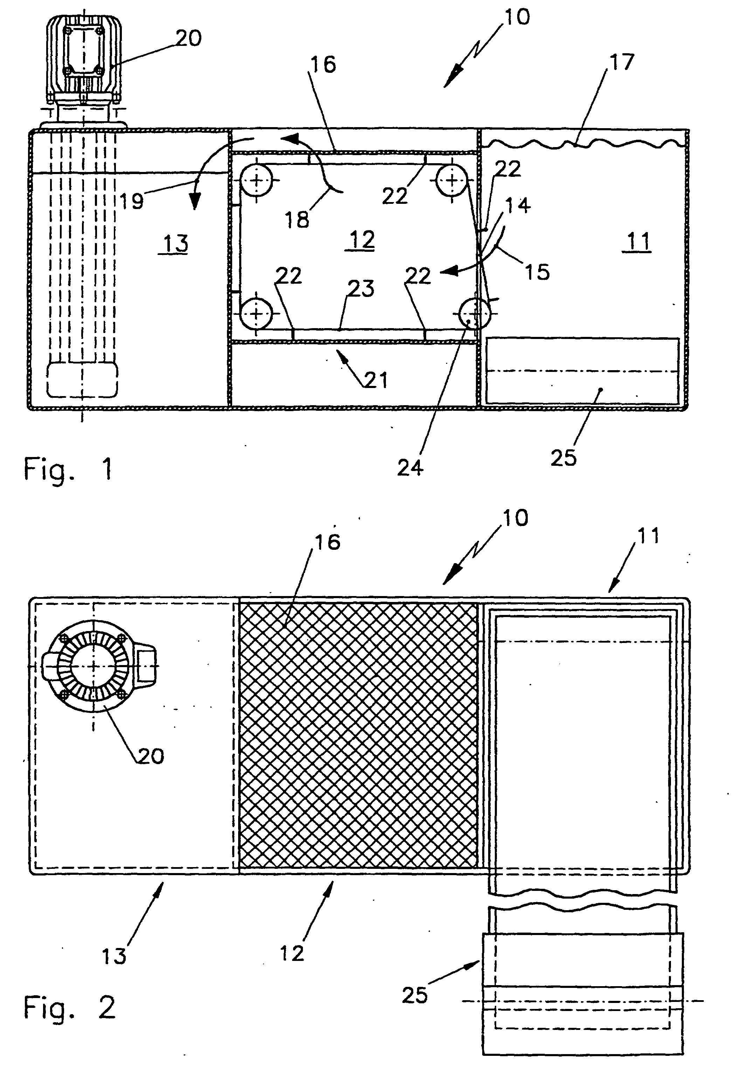

Die Filtervorrichtung 10 nach den Fig. 1 und 2 weist insgesamt drei Behälter 11, 12 und 13 auf. Der erste Behälter 11 dient dabei der kontinuierlichen Aufnahme von zu reinigender Flüssigkeit, beispielsweise von Kühlwasser, das von einer Werkzeugmaschine zufließt. Unmittelbar neben dem ersten Behälter 11 ist der zweite Behälter 12 angeordnet und durch eine . Öffnung 14 in der Seitenwandung mit diesem verbunden. Durch die Öffnung 14 strömt somit die zu reinigende Flüssigkeit entlang des Pfeils 15 in den zweiten Behälter 12, der an seiner Oberseite von einem insbesondere auch aus Fig. 2 ersichtlichen Filtergewebe 16 abgedeckt ist. Das Gewebe 16 ist dabei etwas tiefer angeordnet als der Flüssigkeitsspiegel 17 im ersten Behälter 11, sodass die Flüssigkeit im zweiten Behälter 12 durch die Tendenz zum Niveauausgleich der Flüssigkeit in beiden Behältern 11 und 12 von unten durch das Filtergewebe 16 hindurchtritt und dabei gefiltert wird, was durch den Pfeil 18 angedeutet ist. Die gefilterte Flüssigkeit fließt anschließend entlang des Pfeils 19 in den Auffangbehälter 13 ab. Im Auffangbehälter 13 ist eine Pumpe 20 angeordnet, die die gereinigte Flüssigkeit, beispielsweise eine Kühlflüssigkeit, wieder zurück in den Verbrauchskreislauf, also z. B. zu einer Werkzeugmaschine pumpt.

Der Durchtritt der zu reinigenden Flüssigkeit durch das Filtergewebe 16 in der Richtung von unten nach oben hat den Vorteil, dass sich am Filtergewebe 16 weniger Schmutzpartikel absetzen als bei einem Flüssigkeitsdurchtritt von oben nach unten. Ein großer Teil der ausgefilterten Schmutzpartikel wird vielmehr aufgrund der Schwerkraft auf den Boden 21 des Behälters 12 absinken. Dennoch bildet sich auch bei der erfindungsgemäßen Filtervorrichtung 10 mit der Zeit ein Filterkuchen auf der Unterseite des Gewebes 16. Zu seiner Entfernung sind mehrere Streifenbürsten 22 vorgesehen, die an einer umlaufenden Kette 23, einer Trommel oder an Scheiben angeordnet sind und dabei sowohl die Unterseite des Gewebes 16 als auch den Boden 21 des Behälters 12 reinigen. Der abgebürstete Schmutz wird dann von den Bürsten 22 durch die Öffnung 14 in der Seitenwandung des Behälters 12 in den ersten Behälter 11 ausgetragen. Dazu wird die Kette 23 mit den Streifenbürsten 22 über eine Umlenkrolle 24 bis in den Behälter 11 hineinbefördert. Am Boden des Behälters 11 ist ein Schlamm- und Späneförderer 25 angeordnet, der insbesondere auch aus Fig. 2 ersichtlich ist und der dafür sorgt, dass der Filterschlamm und die Späne aus der Vorrichtung 10 herausbefördert werden.

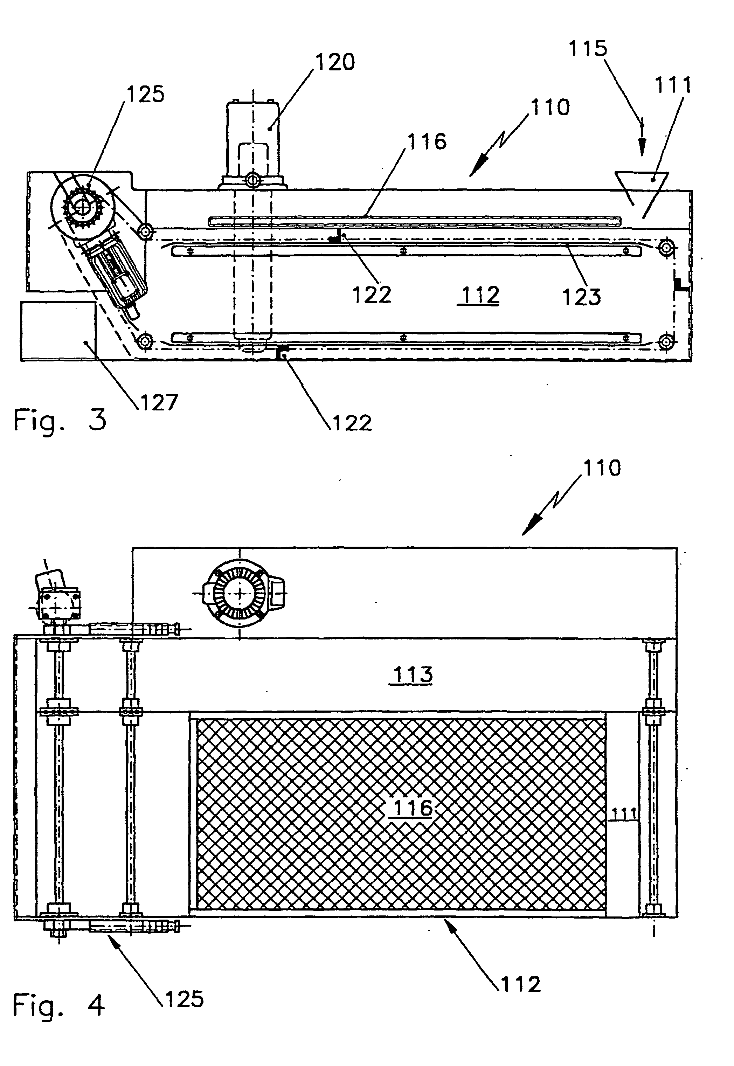

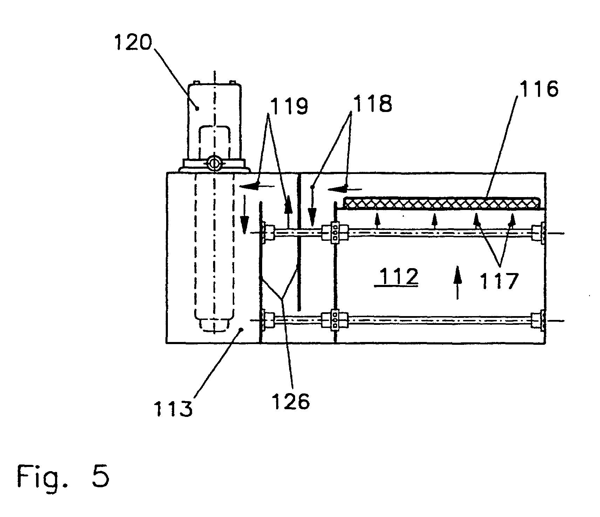

Die Fig. 3 bis 5 zeigen eine weitere erfindungsgemäße Filtervorrichtung 110, die wieder einen Behälter 112 aufweist, der an seiner Oberseite durch ein insbesondere aus Fig. 4 ersichtliches Filtergewebe 116 verschlossen ist. Es fehlt bei dieser Vorrichtung 110 jedoch an einem vorgeschalteten Behälter. Die zu reinigende Flüssigkeit wird vielmehr durch einen oben am Behälter 112 angeordneten Einlass 111 in den Behälter 112 eingefüllt, was in Fig. 3 durch den Pfeil 115 angedeutet ist. Der Auffangbehälter 113 für das Filtrat ist bei der Vorrichtung 110 parallel zur Längsseite des Behälters 112 angeordnet, wie die Fig. 4 und 5 zeigen. Zur Reinigung der Unterseite des Filtereinsatzes 116 sowie des Bodens des Behälters 112 sind wieder an einer umlaufenden Kette 123 angeordnete Streifenbürsten 122 vorgesehen (Fig. 3). An einer Schmalseite des Behälters 112 ist ein Späneförderer 125 angeordnet, der sich nicht nur über die Breite des Behälters 112, sondern auch über einen Teil des Auffangbehälters 113 hinweg erstreckt, wie Fig. 4 zeigt.

Der Grund hierfür ist in Fig. 5 erläutert. Beim Durchtritt des Wassers von unten durch das Filtergewebe 116, was durch die Pfeile 117 angedeutet ist, gelangt die gefilterte Flüssigkeit teilweise noch vermischt mit sehr feinen Schwebstoffen entlang der Pfeile 118 in den Auffangbehälter 113. Dort sind Umlenkvorrichtungen 126 angeordnet, die dafür sorgen, dass das Filtrat zunächst Richtung Boden des Behälters 113 und anschließend Richtung Behälteroberseite gelenkt wird, bevor es neben den Umlenkvorrichtungen 126 wieder nach unten strömt, wie die Pfeile 118 und 119 illustrieren. Durch die Umlenkvorrichtung 126 können sich im Filtrat ggf. noch befindliche Schwebstoffe am Behälterboden absetzen. Dort werden sie vom Späneförderer 125 erfasst und in einen Spänesammelbehälter 127 ausgetragen. Um das Abfließen des Filtrats in den Auffangbehälter 113 zu erleichtern, kann das Filtergewebe 116 in Richtung auf den Auffangbehälter 113 hin leicht geneigt sein. Vom Auffangbehälter 113 aus kann das Filtrat anschließend über eine Pumpe 120 entweder zu weiteren Filtervorrichtungen oder wieder zurück in einen Gebrauchskreislauf gepumpt werden.

Insgesamt stellen die erfindungsgemäßen Filtervorrichtungen konstruktiv einfache, wartungsarme und zuverlässige Reinigungsmöglichkeiten für Flüssigkeiten aller Art, insbesondere aber für Kühlflüssigkeiten von spanabhebenden Werkzeugmaschinen dar.

## Patentansprüche

1. Filtervorrichtung für Flüssigkeiten mit einem Behälter (12, 112), in den die zu filternde Flüssigkeit einströmt und der auf seiner Oberseite mit einem Filter (16, 116) verschlossen ist, sodass die im Behälter (12, 112) ansteigende Flüssigkeit beim Durchtritt durch das Filter (16, 116) gereinigt wird und das Filtrat oberhalb des Filters (16, 116) in einen Auffangbehälter (13, 113) abläuft, **dadurch gekennzeichnet, dass** unterhalb des Filters (16, 116) mindestens eine Streifenbürste (22, 122) vorgesehen ist, mit der die Unterseite des Filters (16, 116) und/oder der Boden (21) des Behälters (12, 112) reinigbar ist.

2. Filtervorrichtung nach Anspruch 1, **dadurch gekennzeichnet, dass** der Behälter (12) eine Öffnung (14) in seiner Seitenwand aufweist, durch die die zu reinigende Flüssigkeit aus einem vorgeschalteten Behälter (11) einströmt.

3. Filtervorrichtung nach Anspruch 1 oder 2, **dadurch gekennzeichnet, dass** das Filter ein Gewebe (16, 116) oder ein Filterpapier ist.

4. Filtervorrichtung nach einem der vorhergehenden Ansprüche, **dadurch gekennzeichnet, dass** zur Reinigung der Unterseite des Filters (16, 116) sowie des Bodens (21) des Behälters (12, 112) mehrere an einem umlaufenden Träger (23, 123) angeordnete Streifenbürsten (22, 122) vorgesehen sind, die die Verschmutzung durch eine Öffnung (14) in der Seitenwand austragen.

5. Filtervorrichtung nach einem der Ansprüche 2 bis 4, **dadurch gekennzeichnet, dass** sich die Öffnung (14) in der Seitenwand des Behälters (12) bis zum Behälterboden (21) erstreckt.

6. Filtervorrichtung nach einem der Ansprüche 1 bis 5, **dadurch gekennzeichnet, dass** sie einen Schlamm- und Späneförderer (25, 125) zum Austrag der Verschmutzungen aus der Vorrichtung (10, 110) aufweist.

7. Filtervorrichtung nach einem der Ansprüche 1 bis 6, **dadurch gekennzeichnet, dass** die Behälter (11, 12, 13; 112, 113) einen rechteckigen Querschnitt aufweisen und unmittelbar aneinander angrenzen.

8. Filtervorrichtung nach einem der Ansprüche 2 bis 7, **dadurch gekennzeichnet, dass** der Behälter (12) einen gegenüber dem Boden des vorgeschalteten Behälters (11) erhöhten Boden (21) aufweist.

9. Filtervorrichtung nach einem der Ansprüche 1 bis 8, **dadurch gekennzeichnet, dass** im Auffangbehälter (113) eine Umlenkvorrichtung (126) für die gefilterte Flüssigkeit angeordnet ist, sodass die Flüssigkeit zunächst Richtung Behälterboden und anschließend Richtung Behälteroberseite strömt.

10. Filtervorrichtung nach einem der Ansprüche 1 bis 9 für Kühlflüssigkeiten, **dadurch gekennzeichnet, dass** sie mit einer Werkzeugmaschine verbunden ist und im Auffangbehälter (13, 113) eine Pumpe (20, 120) zur Rückförderung der gereinigten Kühlflüssigkeit zur Werkzeugmaschine angeordnet ist.

## Claims

1. Filter for liquids with a vessel (12, 112), into which the liquid to be filtered flows and which is closed by a filter (16, 116) on its upper side, such that the liquid rising in the vessel (12, 112) is cleaned on passing through the filter (16, 116) and the filtrate runs off above the filter (16, 116) into a collection vessel (13, 113), **characterized in that** at least one strip wiper (22, 122) is provided below the filter (16, 116), with which the underside of the filter (16, 116) and/or the bottom (21) of the vessel (12, 112) can be cleaned.

2. Filter in accordance with claim 1, **characterized in that** the vessel (12) has an opening (14), in its lateral wall, through which the liquid to be cleaned, flows in from a vessel (11) on the input side.

3. Filter in accordance with claim 1 or 2, **characterized in that** the filter is a textile fabric (16, 116) or a filter paper.

4. Filter in accordance with one of the preceding claims, **characterized in that** several strip wipers (22, 122), arranged on surrounding carrying means (23, 123), and removing dirt through an opening (14) in the lateral wall, are provided for cleaning the underside of the filter (16, 116) and the bottom (21) of the vessel (12, 112).

5. Filter in accordance with one of claims 2 to 4, **characterized in that** the opening (14) in the lateral wall of the vessel (12) extends as far as the bottom (21) of the vessel.

6. Filter in accordance with one of claims 1 to 5, **characterized in that** it has sediment and chipping conveying means (25, 125) for removal of contamination from the device (10, 110).

7. Filter in accordance with one of claims 1 to 6, **characterized in that** the vessels (11, 12, 13; 112, 113) have a rectangular cross-sectional form and border immediately on each other.

8. Filter in accordance with one of claims 2 to 7, **characterized in that** the vessel (12) has a base (21) that is raised in relation to the bottom of the vessel on the input side (11).

9. Filter in accordance with one of claims 1 to 8, **characterized in that** means to divert (126) the filtered liquid are disposed in the collecting vessel (113), so that the liquid first flows towards the bottom of the vessel and than towards the upper side of the vessel.

10. Filter in accordance with one of claims 1 to 9 for liquids, **characterized in that** it is connected with a machine tool and **in that** a pump (20, 120) for returning the cleaned coolant to the machine tool is disposed in the collecting vessel (13, 113).

## Revendications

1. Dispositif de filtration pour liquides comportant un récipient (12, 112) dans lequel pénètre le liquide à filtrer et qui est fermé sur son côté supérieur par un filtre (16, 116), de sorte que le liquide montant dans le récipient (12, 112) est épuré au passage à travers le filtre (16, 116), et le filtrat au-dessus du filtre (16, 116) s'écoule dans un récipient de collecte (13, 113), **caractérisé en ce qu'**au-dessous du filtre (16, 116) est prévue au moins une brosse de raclage (22, 122) au moyen de laquelle la face inférieure du filtre (16, 116) et/ou le fond (21) du récipient (12, 112) peuvent être nettoyés.

2. Dispositif de filtration selon la revendication 1, **caractérisé en ce que** le récipient (12) présente une ouverture (14) dans sa paroi latérale à travers laquelle le liquide à épurer pénètre depuis un récipient (11) placé en amont.

3. Dispositif de filtration selon la revendication 1 ou 2, **caractérisé en ce que** le filtre est un tissu (16, 116) ou un papier filtrant.

4. Dispositif de filtration selon l'une des revendications précédentes, **caractérisé en ce que** pour nettoyer la face inférieure du filtre (16, 116) ainsi que du fond (21) du récipient (12, 112), il est prévu plusieurs brosses de raclage (22, 122) disposées sur un support périphérique (23, 123), lesquelles extraient les impuretés à travers une ouverture (14) ménagée dans la paroi latérale.

5. Dispositif de filtration selon l'une des revendications 2 à 4, **caractérisé en ce que** l'ouverture (14) ménagée dans la paroi latérale du récipient (12) s'étend jusqu'au fond (21) du récipient.

6. Dispositif de filtration selon l'une des revendications 1 à 5, **caractérisé en ce qu'**il comporte un transporteur de boues et copeaux (25, 125) pour l'extraction des impuretés du dispositif (10, 110).

7. Dispositif de filtration selon l'une des revendications 1 à 6, **caractérisé en ce que** les récipients (11, 12, 13 ; 112, 113) présentent une section transversale rectangulaire et sont directement adjacents les uns aux autres.

8. Dispositif de filtration selon l'une des revendications 2 à 7, **caractérisé en ce que** le récipient (12) comporte un fond (21) surélevé par rapport au fond du récipient (11) situé en amont.

9. Dispositif de filtration selon l'une des revendications 1 à 8, **caractérisé en ce que** dans le récipient de collecte (113) est disposé un dispositif de renvoi (126) pour le liquide filtré, ce qui fait que le liquide s'écoule d'abord en direction du fond du récipient puis en direction de la face supérieure du récipient.

10. Dispositif de filtration selon l'une des revendications 1 à 9 pour liquides de refroidissement, **caractérisé en ce qu'**il est relié à une machine-outil et dans le récipient de collecte (13, 113) est disposée une pompe (20, 120) pour refouler les liquides de refroidissement épurés vers la machine-outil.
